# EUROPEAN PATENT SPECIFICATION

(11) **EP 2 492 530 B1**
(45) Date of publication and mention of the grant of the patent: **14.05.2014**
(21) Application number: 11190480.1
(22) Date of filing: 24.11.2011
(51) Int. Cl.: F16D 3/18, F16D 7/02

(54) **Gear flexible coupling for transmitting torque between a drive shaft and a driven shaft, particularly for use on high-speed trains**
Gangflexible Kupplung zur Übertragung des Drehmoments zwischen einem Antriebsschaft und einem angetriebenen Schaft, insbesondere zur Verwendung mit Hochgeschwindigkeitszügen
Couplage flexible d'engrenages pour la transmission de couple entre un arbre d'entraînement et un arbre entraîné, en particulier pour une utilisation dans les trains à grande vitesse

(30) Priority: 28.02.2011 IT TO20110173
(43) Date of publication of application: 29.08.2012
(73) Proprietor: Maina Organi di Trasmissione S.p.A., 14100 Asti (IT)
(72) Inventor: Savio, Adriano, 20090 Cesano Boscone (Milano) (IT)
(74) Representative: Rondano, Davide

(56) References cited:
- WO-A1-98/12443
- WO-A1-99/27268
- GB-A- 824 931

## Description

The present invention relates to a gear flexible coupling (hereinafter simply referred to, for the sake of convenience, as gear coupling) for transmitting torque between a drive shaft and a driven shaft, arranged to allow radial, axial and angular relative movements between these shafts. Gear couplings of this kind are for instance used in the railway field. It is however clear that this application is not to be regarded as limiting the scope of protection of the present invention.

A gear coupling having the features set forth in the preamble of independent claim 1 is known from e.g. WO9812443 or WO 9927268. The gear coupling proposed in this prior-art document is particularly suitable for use on high-speed trains. According to this known solution, the gear coupling consists of two half-couplings substantially identical to each other, each of which comprises a hub and a sleeve. The hub of one of the two half-couplings is torsionally connected to either of the shafts so as to rotate about a respective axis of rotation substantially coinciding with the axis of this shaft, whereas the hub of the other half-coupling is torsionally connected to the other shaft so as to rotate about a respective axis of rotation substantially coinciding with the axis of this shaft. The sleeves of the two half-couplings are rigidly connected to each other and to this end they are provided with respective connecting flanges having through holes for insertion of calibrated bolts. The hub of each half-coupling is provided with rounded outer teeth having a symmetrical shape with respect to a plane of symmetry perpendicular to the axis of rotation of the hub, whereas the sleeve of each half-coupling is provided with inner teeth meshing with the outer teeth of the respective hub and is axially slidable relative to this latter, thereby allowing axial relative movements between the hub and the sleeve of each half-coupling and hence between the two shafts connected through the gear coupling. In order to limit these axial relative movements, the gear coupling further comprises an axial travel limiting device, preferably one for each half-coupling, which is accommodated in an annular seat provided between a pair of coaxial tubular portions of the hub, wherein the radially outer tubular portion caries on its outer surface the rounded outer teeth. Each axial travel limiting device comprises a stop annular element or nose (hereinafter simply referred to as nose), fixed to the hub substantially in the aforesaid plane of symmetry, and a pair of abutment elements which are arranged on axially opposite sides of the nose and are fixed to the respective sleeve. More specifically, the abutment elements of each axial travel limiting device are carried by a cap which is fixed to the distal end (i.e. to the end facing towards the opposite side with respect to the other half-coupling) of the respective sleeve and extends inside the annular seat of the respective hub. In order to ensure tightness of the gear coupling, which operates in oil bath, each half-coupling is provided with a seal member which is received in a circumferential groove provided on the outer surface of the radially inner tubular portion of the respective hub in the aforesaid plane of symmetry and cooperates with the inner surface of a tubular portion of the respective cap.

It is an object of the present invention to provide a gear flexible coupling of the above-specified type, which has more compact sizes, but which is able at the same time to transmit a higher torque than the above-discussed prior art. A further object of the present invention is to provide a gear flexible coupling of the above-specified type, which is able to offer a safer tightness against lubricating oil, and which requires therefore less servicing operations, even in case of particularly heavy working conditions, such as those occurring when the gear coupling is used on high-speed trains, than the above-discussed prior art.

These and other objects are fully achieved according to the invention by virtue of a gear flexible coupling having the features set forth in the characterizing part of independent claim 1.

Further advantageous features of the invention are set forth in the dependent claims, the content of which is to be regarded as an integral and integrating part of the following description.

In short, the invention is based on the idea of configuring the axial travel limiting device of at least one half-coupling (preferably of both the half-couplings) in such a manner that the nose is fixed to the sleeve, or better to the cap (which is however fixed in turn to the sleeve), whereas the two abutment elements cooperating with the nose are fixed to the hub. Such an arrangement of the nose and of the abutment elements allows to reduce the annular section of the hub with respect to the above-discussed prior art, which results in the hub being stronger and more rigid and hence able to transmit higher torques and bear higher dynamic angular misalignments (for instance up to 6 degrees).

According to the invention, the nose is integrally formed by a tubular portion of the cap fixed to the respective sleeve, which tubular portion extends inside the annular seat provided in the respective hub parallel to the coaxial tubular portions of this latter. This allows to stiffen the tubular portion of the cap in the zone where the nose is formed, thus making the stop function performed by the nose and by the associated abutment elements more effective.

Preferably, the abutment elements are arranged on opposite sides and are substantially equally spaced with respect to a plane of symmetry of the outer teeth of the respective hub, whereby in the centred condition of the nose relative to the abutment elements (no axial misalignment) the nose is axially aligned with the aforesaid plane of symmetry. Preferably, the nose projects radially outwards from the tubular portion of the respective cap, in which case the associated abutment elements are fixed to a radially outer tubular portion of the respective hub. Alternatively, the nose may project radially inwards from the tubular portion of the respective cap, in which case the associated abutment elements are fixed to a radially inner tubular portion of the respective hub.

Preferably, each half-coupling comprises a seal member which is received in a circumferential groove provided on the respective hub in the aforesaid plane of symmetry and cooperates with a surface of the tubular portion of the respective cap located on the radially opposite side with respect to the nose. In this connection, since the nose is integrally formed with the tubular portion of the cap, with resulting higher stiffness of this portion, the deformations of the surface of this portion with which the seal member cooperates can be reduced and therefore tightness can be improved.

Either of the half-couplings may be provided with a torque overload safety device.

Further features and advantages of the invention will become clear from the following detailed description, given purely by way of non-limiting example with reference to the appended drawings, in which:
Figure 1 is an axial section view of a gear flexible coupling according to a first preferred embodiment of the present invention, in the aligned condition of the drive and driven shafts connected to each other through the coupling;
Figure 2 is an axial section view of the coupling of Figure 1, in a radially and axially misaligned condition of the drive and driven shafts connected to each other through the coupling;
Figure 3 is an axial section view of a gear flexible coupling of the same type as that of Figures 1 and 2, in which one of the two half-couplings is provided with a torque overload safety device;
Figure 4 is an axial section view of a gear flexible coupling according to a further preferred embodiment of the present invention, in the aligned condition of the drive and driven shafts connected to each other through the coupling;
Figure 5 is an axial section view of the coupling of Figure 4, in a radially and axially misaligned condition of the drive and driven shafts connected to each other through the coupling;
Figure 6 is an axial section view of a gear flexible coupling of the same type as that of Figures 4 and 5, in which one of the two half-couplings is provided with a torque overload safety device.

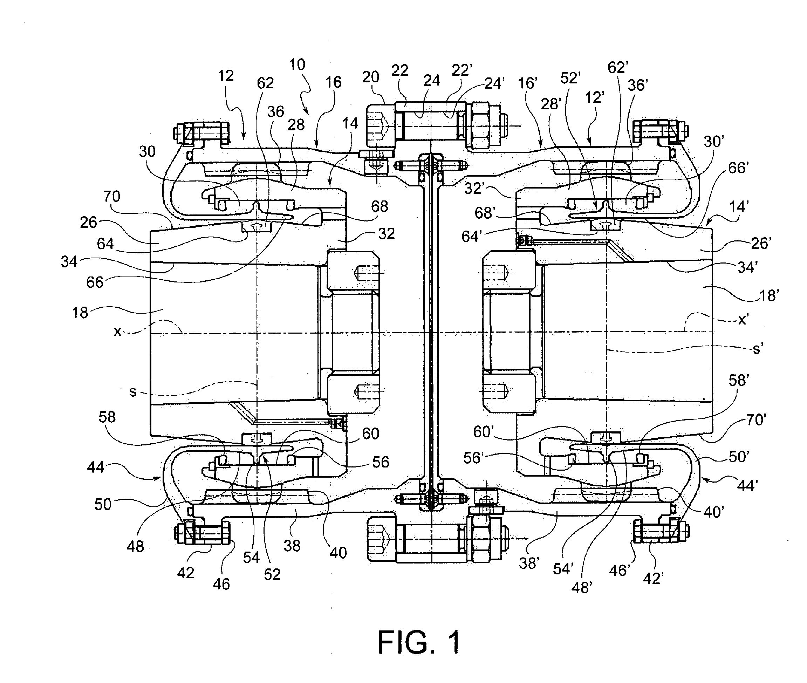

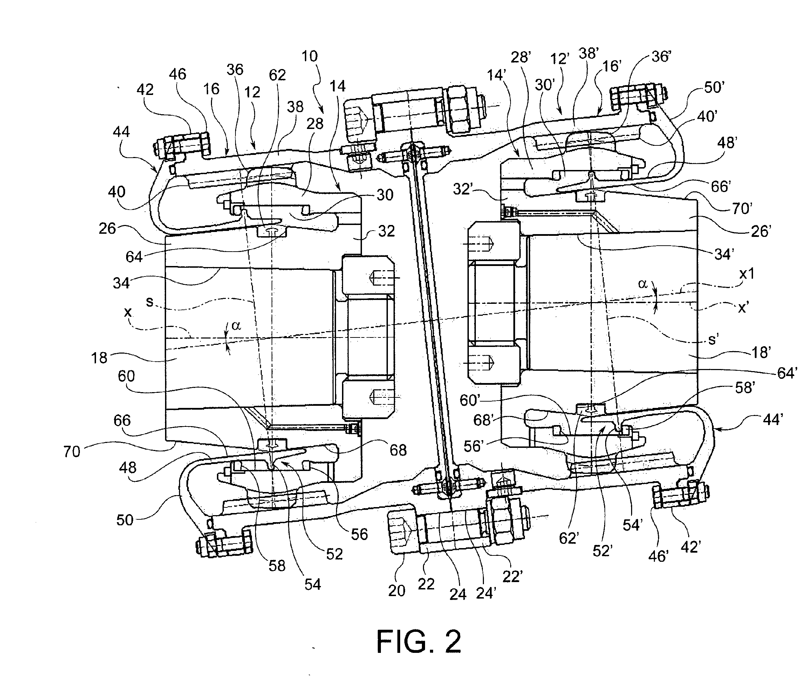

With reference first to Figures 1 and 2, a gear flexible coupling according to a first preferred embodiment of the present invention is generally indicated 10 and comprises first and second half-couplings 12 and 12' substantially identical to each other. Each of the two half-couplings 12 and 12' comprises a hub and a sleeve, which are indicated 14 and 16, respectively, as far as the first half-coupling 12 is concerned, and 14' and 16', respectively, as far as the second half-coupling 12' is concerned. The hub 14 of the first half-coupling 12 is torsionally connected to a first shaft 18 (for instance a drive shaft) so as to rotate about a first axis of rotation x (which is also an axis of symmetry for this hub) coinciding with the axis of this shaft, whereas the hub 14' of the second half-coupling 12' is torsionally connected to a second shaft 18' (for instance a driven shaft) so as to rotate about a second axis of rotation x' (which is also an axis of symmetry for this hub) coinciding with the axis of this shaft. The sleeves 16 and 16' of the two half-couplings 12 and 12' are rigidly connected to each other by releasable connecting means, in particular by threaded connecting means (in the present case by means of calibrated bolts 20), and to this end they are provided with respective connecting flanges 22 and 22' having through holes 24 and 24' for insertion of the bolts 20. Due to the identical (or substantially identical) configuration of the two half-couplings 12 and 12', the structure of the first half-coupling 12 only will be described here below, being understood that what will be explained in connection with this half-coupling is equally well applicable to the other half-coupling. Moreover, similar components and parts of the two half-couplings 12 and 12' are indicated in the drawings with the same reference numerals, only an apostrophe being added to the components and parts of the second half-coupling 12'.

The hub 14 comprises a pair of coaxial cylindrical tubular portions 26 and 28, namely a first radially inner tubular portion 26 (hereinafter simply referred to as first tubular portion) and a second radially outer tubular portion 28 (hereinafter simply referred to as second tubular portion), between which an annular seat 30 is defined. The hub 14 further comprises a connecting portion 32 which extends substantially in a plane perpendicular to the axis x and connects the first and second tubular portions 26 and 28 to each other at their proximal ends, i.e. at their ends facing towards the other half-coupling 12'. The annular seat 30 is therefore open towards the distal side of the half-coupling 12, i.e. on to the opposite side with respect to the other half-coupling 12'. The first tubular portion 26 is intended to be mounted on an end portion of the first shaft 18 and to be torsionally coupled to this portion. In this connection, the first tubular portion 26 preferably has a through hole 34 with a given taper for force-fitting of the shaft 18 in the hub 14. The second tubular portion 28 has rounded outer teeth 36 having a symmetrical shape with respect to a plane of symmetry s perpendicular to the axis x of the hub 14. Preferably, the second tubular portion 28 has a smaller wall thickness than that of the first tubular portion 26. Preferably, the first tubular portion 26, the second tubular portion 28 with the respective rounded outer teeth 36 and the connecting portion 32 of the hub 14 are made as a single piece.

The sleeve 16 comprises a tubular portion 38 inside which the hub 14 is received. In the condition of perfect alignment between the axes x and x' of the two shafts 18 and 18' shown in Figure 1, the sleeve 16, and in particular the tubular portion 38, is arranged coaxially to the respective hub 14. The tubular portion 38 is provided with straight inner teeth 40 meshing with the rounded outer teeth 36 of the respective hub 14 and is able to slide longitudinally relative to this latter, thereby allowing axial relative movements between the hub 14 and the sleeve 16. The sleeve 16 further comprises the aforesaid connecting flange 22, which extends radially outwards from the proximal end zone of the tubular portion 38, as well as a mounting flange 42, which extends radially outwards from the distal end zone of the tubular portion 38. Preferably, the tubular portion 38, the connecting flange 22 and the mounting flange 42 of the sleeve 16 are made as a single piece.

The sleeve 16 further comprises a cap 44 which is made as a separate component with respect to the tubular portion 38 and is fixed by releasable connecting means, in particular by threaded connecting means (in the present case by means of bolts 46), to the mounting flange 42. The cap 44 comprises a tubular portion 48 which extends in the annular seat 30 coaxially to the tubular portion 38 of the sleeve 16, and an end flange 50, which extends substantially radially outwards from the distal end of the tubular portion 48 to be fixed to the mounting flange 42 of the sleeve 16. Preferably, the tubular portion 48 and the end flange 50 of the cap 44 are made as a single piece.

By virtue of the rounded outer teeth 36 of the hub 14 meshing with the straight inner teeth 40 of the sleeve 16, relative linear movements between the hub 14 and the sleeve 16 are allowed in the axial direction, as well as relative angular movements between the hub 14 and the sleeve 16 resulting in an angular misalignment between the axes of the hub and of the sleeve, as will be better explained further on with reference to Figure 2.

In order to limit the relative linear movements between the hub 14 and the sleeve 16, the half-coupling 12 further comprises an axial travel limiting device 52 accommodated in the annular seat 30. The axial travel limiting device 52 comprises a nose 54, which is made as an annular element and is fixed to the sleeve 16, and a pair of abutment elements 56 and 58, which are fixed to the hub 14 and are arranged on axially opposite sides with respect to the nose 54 so as to define respective axial abutment surfaces for this latter, i.e. surfaces able to limit the movement of the nose 54 in the direction of the axis x. The nose 54 is integrally formed with the tubular portion 48 of the cap 44. The abutment elements 56 and 58 are made as annular elements having a mean diameter approximately equal to that of the nose 54, and in any case an inner diameter smaller than the outer diameter of the nose 54. According to a first preferred embodiment of the invention, to which Figures 1 and 2, as well as Figure 3, refer, the nose 54 is arranged so as to project radially outwards from the outer surface of the tubular portion 48 of the cap 44, whereas the abutment elements 56 and 58 are mounted on the second tubular portion 28 of the hub 14, namely at the axially opposite ends of an inner cylindrical guide surface 60 of the second tubular portion 28. Preferably, the abutment elements 56 and 58 are arranged on opposite sides and substantially equally spaced with respect to the plane of symmetry s of the outer teeth 36 of the hub 14, whereby in the centred condition (shown in Figure 1) of the nose 54 relative to the abutment elements 56 and 58, i.e. in the condition in which there is no axial misalignment, the nose 54 is axially aligned with the plane of symmetry s. Preferably, the abutment elements 56 and 58 are made of, or at least coated with, a cushioning material, for instance an elastomeric material.

The gear coupling 10 operates in oil bath, and to this end the space between the hub 14 and the sleeve 16 of the half-coupling 12, including the annular seat 30 in which the axial travel limiting device 52 is accommodated, is filled with lubricating oil. In order to ensure tightness against lubricating oil leakages, the half-coupling 12 is provided with a seal member 62 which is made as an axial/radial seal member and is inserted into a circumferential groove 64 provided on the outer surface of the first tubular portion 26 of the hub 14, whereby the seal member 62 cooperates with an inner surface 66, made as a cylindrical surface, of the tubular portion 48 of the cap 44. In other words, the seal member 62 cooperates with the surface (in this case the inner surface) of the tubular portion 48 of the cap 44 opposite to the surface (in this case the outer surface) from which the nose 54 of the axial travel limiting device 52 projects radially. Preferably, the seal member 62 is positioned in the plane of symmetry s of the outer teeth 36 of the hub 14, whereby in the aforesaid condition of no axial misalignment between the hub 14 and the sleeve 16 the seal member is axially aligned with the nose 54.

Moreover, in order to allow angular misalignments between the hub 14 and the sleeve 16, as will be better explained further on with reference to Figure 2, the outer surface of the first tubular portion 26 of the hub 14 advantageously has a double taper, namely a first taper 68 which extends between the circumferential groove 64 and the proximal end of this hub portion converging towards this end and a second taper 70 which extends between the circumferential groove 64 and the distal end of this hub portion converging towards this end.

Whereas Figure 1 shows the gear coupling 10 in the condition of perfect radial and angular alignment between the axes of the shafts 18 and 18', and hence of perfect axial and angular alignment between the axis x, x' of the hub 14, 14' and the axis of the sleeve 16, 16' of each half-coupling 12, 12', Figure 2 shows the gear coupling 10 in the condition of maximum radial and angular misalignment allowed. In this condition, the axis x of the hub 14 of the first half-coupling 12 is no more aligned with the axis x' of the hub 14' of the second half-coupling 12', although it remains parallel to this latter. Moreover, the axis of the sleeves 16, 16' (the sleeves 16, 16' are rigidly connected to each other by means of the bolts 20 inserted into the through holes 24, 24' of the respective connecting flanges 22, 22', and hence the respective axes remain always aligned with each other), indicated x1, is inclined to the axes x, x' of the hubs 14, 14' by an angle α equal for instance to 6 degrees. As a result of the angular misalignment between the hub 14, 14' and the sleeve 16, 16' of each half-coupling 12, 12', the nose 54', 54 of the axial travel limiting device 52, 52' of at least one of the half-couplings 12, 12' abuts against one of the two abutment elements 56, 56', 58, 58' associated thereto. In the condition shown in Figure 2, the noses 54, 54' abut against the distal abutment elements 58, 58', namely against the left-hand abutment element (with respect to point of view of the observer of Figure 2), as far as the first half-coupling 12 is concerned, and against the right-hand abutment element (with respect to the point of view of the observer of Figure 2), as far as the second half-coupling 12' is concerned.

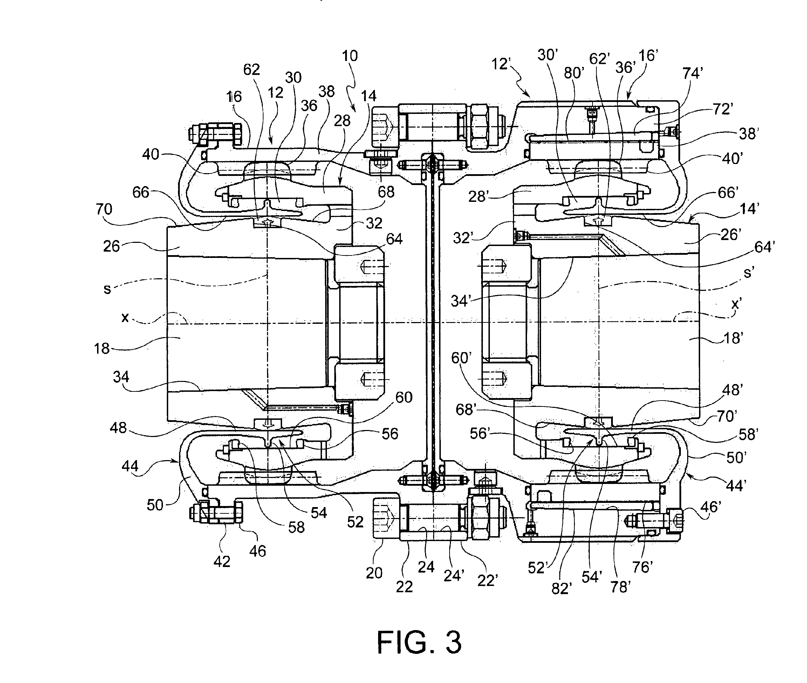

Figure 3, where parts and components identical or corresponding to those of Figures 1 and 2 are indicated with the same reference numerals, shows the operating condition of the gear coupling corresponding to the one shown in Figure 1 (perfect alignment between the drive and driven shafts), but relates to a variant of the gear coupling according to the invention which differs from the embodiment described above with reference to Figures 1 and 2 in that one of the two half-couplings, namely the second half-coupling 12', is provided with a torque overload safety device having the function of interrupting the transmission of the torque through the coupling once a predetermined maximum value of the torque is exceeded. As far as the hub 14', the axial travel limiting device 52' and the arrangement of the seal member 64' of the second half-coupling 12' are concerned, there are substantially no differences with respect to the first half-coupling 12. Reference is therefore made to what has been previously explained about the first half-coupling 12 with reference to Figures 1 and 2.

In the version of the gear coupling provided with a torque overload safety device, the sleeve 16' of the second half-coupling 12' consists (at least) in the following three sleeve parts arranged coaxially to each other: a first radially inner sleeve part 38', a second radially outer sleeve part 72' and a third radially intermediate sleeve part 74'. The first sleeve part 38' is provided with the inner teeth 40' and has a cylindrical outer surface 76'. The second sleeve part 72', to which the cap 44' is fixed, has a tapered inner surface 78' converging towards the inside of the gear coupling. The third sleeve part 74' is wedge-shaped and has a cylindrical inner surface 80' which cooperates with the cylindrical outer surface 76' of the first sleeve part 38' and a tapered outer surface 82' which cooperates with the tapered inner surface 78' of the second sleeve part 72' and has to this end a taper substantially identical to that of the tapered inner surface 78'. The third sleeve part 74' is force-fitted between the first and second sleeve parts 38', 72' with an oil film interposed both between the two cylindrical surfaces 76' and 80' and between the two tapered surfaces 78' and 82', so as to allow the transmission of the torque by friction between the first and second sleeve parts 38', 72' through the third sleeve part 74' up to a given maximum torque. The value of this maximum torque can be set in advance by appropriate calibration of the force with which the third sleeve part 74' is force-fitted between the other two sleeve parts 38' and 72'.

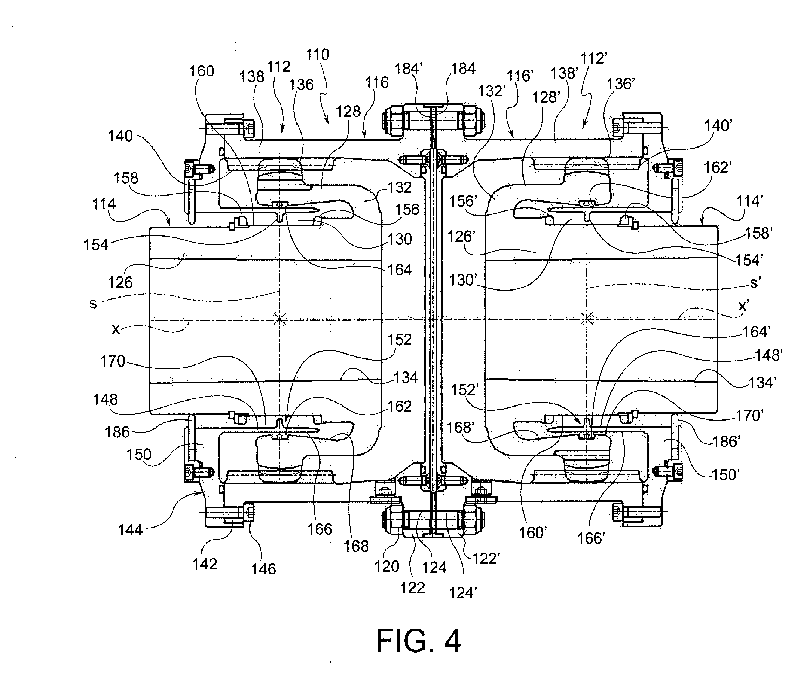

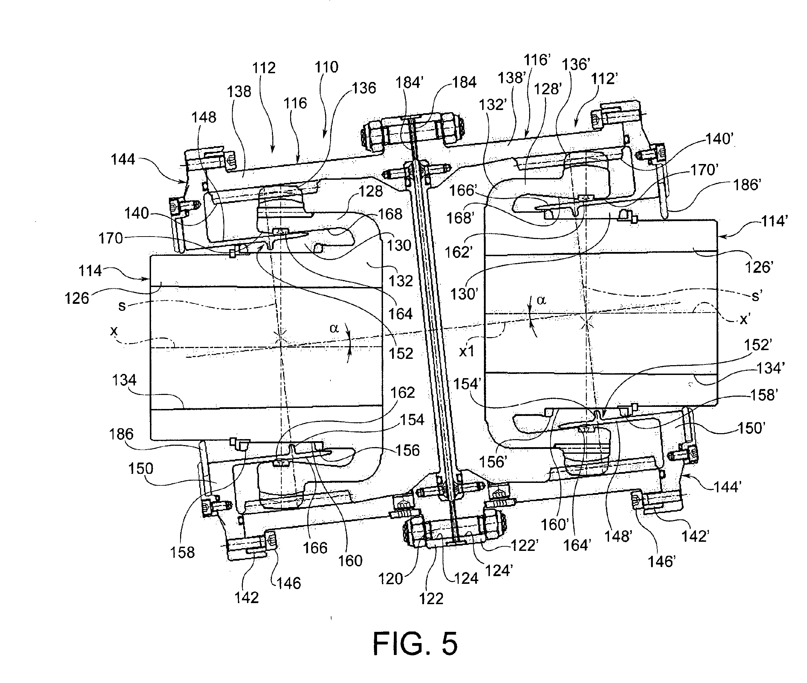

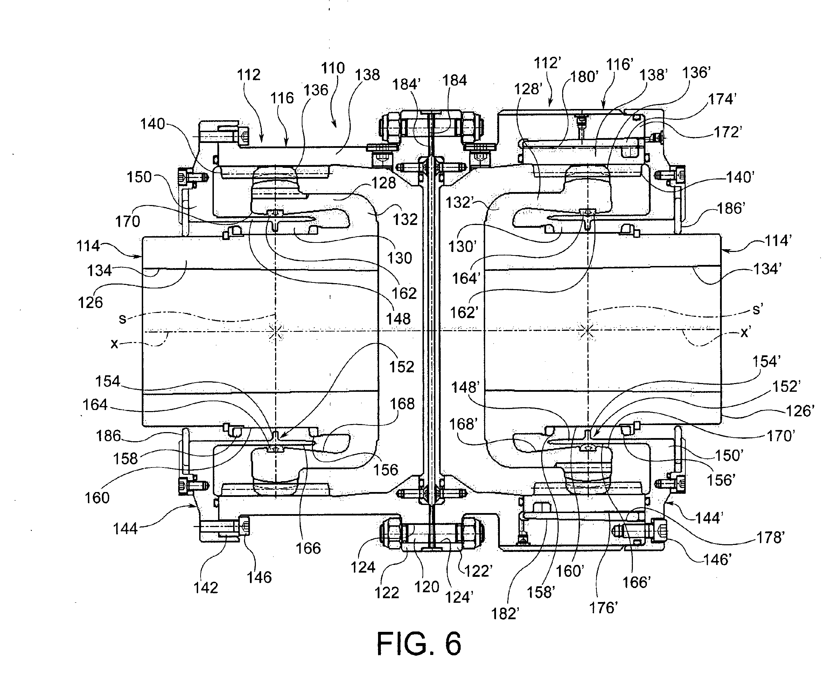

A second preferred embodiment of the present invention is illustrated in Figures 4 to 6, where parts and components identical or functionally/structurally equivalent to those of Figures 1 to 3 have been given the same reference numerals, increased by 100. More specifically, Figures 4 and 5 show the gear coupling in the condition of perfect alignment between the two shafts connected through the coupling and in the condition of maximum misalignment between the shafts, respectively, whereas Figure 6 shows, only in the condition of perfect alignment between the shafts, the version of the gear coupling of Figures 4 and 5 in which one of the two half-couplings is provided with a torque overload safety device.

Only the differences between this second preferred embodiment of the present invention and the first embodiment described above with reference to Figures 1 to 3 will be explained here below.

As far as the axial travel limiting device is concerned, which is now indicated 152 for the first half-coupling 112 and 152' for the second half-coupling 112', the nose and the abutment elements are now arranged in a manner which is radially inverted with respect to the first embodiment, being understood that the axial travel limiting device is accommodated in the annular seat 130, 130' provided between the first tubular portion 126, 126' and the second tubular portion 128, 128' of the hub 114, 114', and that the axial travel limiting device comprises a nose 154, 154', which is made as an annular element and is fixed to the sleeve 116, 116', and a pair of abutment elements 156, 156' and 158, 158', which are fixed to the hub 114, 114' and are arranged on axially opposite sides with respect to the nose 154, 154' so as to define respective axial abutment surfaces for this latter. In this case, in fact, the nose 154, 154' is arranged so as to project radially inwards from the inner surface of the tubular portion 148, 148' of the cap 144, 144', whereas the abutment elements 156, 156' and 158, 158' are mounted on the first tubular portion 126, 126' of the hub 114, 114', namely at the axially opposite ends of an outer cylindrical guide surface 160, 160' of this tubular portion. Differently from the first embodiment, the abutment elements 156, 156' and 158, 158' are therefore arranged outside the lubricated area of the coupling.

The arrangement of the seal member 162, 162' is also radially inverted with respect to the first embodiment. The seal member 162, 162' is in fact inserted in this case into a circumferential groove 164, 164' provided on the inner surface of the second tubular portion 128, 128' of the hub 114, 114', so as to cooperate with an outer surface 166, 166', made as a cylindrical surface, of the tubular portion 148, 148' of the cap 144, 144'. However, the principle that the seal member 162, 162' cooperates with the surface of the tubular portion 148, 148' of the cap 144, 144' opposite to the surface from which the nose 154, 154' of the axial travel limiting device 152, 152' radially projects still applies. Accordingly, the double taper of the surface of the tubular portion of the hub where there is formed the circumferential groove receiving the seal member is in this case provided on the inner surface of the second tubular portion 128, 128' of the hub 114, 114'. Advantageously, the cross-section of the circumferential groove 164, 164' has a dovetail shape, so as to ensure higher resistance against pulling of the seal member out of the groove. This last feature may also be provided in the first embodiment.

A further difference with respect to the first embodiment as shown in Figures 1 to 3 is the way the sleeves 116, 116' of the two half-couplings 112, 112' are connected to each other. In this second embodiment, in fact, the connecting flanges 122, 122' of the two sleeves 116, 116' have, in addition to the through holes 124, 124' for insertion of the threaded connecting means 120, respective front teeth 184, 184' (such as for instance Hirth teeth) meshing with each other. Since the connecting flanges are provided with front teeth meshing with each other, it is possible to use, as threaded connecting means, common non-calibrated screws. This way of connection of the sleeves of the two half-couplings with each other might be applied also to the gear coupling according to the above-described first embodiment, as it does not depend on the configuration used for the axial travel limiting device.

By virtue of the features illustrated above, an advantage of this second embodiment of the gear coupling according to the present invention is certainly that assembling and servicing of the gear coupling are very easy.

A further advantageous feature of this second embodiment of the invention consists in that each half-coupling 112, 112' further comprises a protection cover 186, 186' which is fixed to the respective cap 144, 144' on the axially opposite side with respect to the tubular portion 148, 148' and has the function of preventing dirt from getting into the annular seat 130, 130' where the respective axial travel limiting device 152, 152' is accommodated. Each protection cover 186, 186' is preferably shaped as a floating disc and is made for instance of carbon fibres with molybdenum disulphide added thereto.

Finally, with regard to the version of the gear coupling shown in Figure 6, i.e. the version in which one of the two half-couplings is provided with a torque overload safety device, what has been explained above with reference to Figure 3 still applies.

The gear coupling according to the present invention can be regarded as being an outright universal coupling, since it is able to keep constant-velocity and balance conditions even in case of large relative axial movements between the two shafts which are torsionally coupled by means of the coupling and even in case of large dynamic angular misalignments (for instance up to 6 degrees) between the two shafts. Moreover, by virtue of its particularly rigid structure, the gear coupling according to the present invention is able to transmit high torques at very high rotational speeds.

Naturally, the principle of the invention remaining unchanged, the embodiments and the constructional details may vary widely from those described and illustrated purely by way of non-limiting example.

For instance, although the axial travel limiting device described above with reference to the drawings is preferably provided in both the half-couplings of the gear coupling, alternatively it might be provided only in one of the two half-couplings.

## Claims

1. Gear coupling (10; 110) comprising first and second half-couplings (12, 12'; 112, 112'),
wherein each of said first and second half-couplings (12, 12'; 112, 112') comprises a hub (14, 14'; 114, 114') and a sleeve (16, 16'; 116, 116'), the hub (14; 114) of said first half-coupling (12; 112) being arranged to be torsionally connected to a first shaft (18) so as to rotate about a first axis of rotation (x) substantially coinciding with the axis of said first shaft (18), the hub (14'; 114') of said second half-coupling (12'; 112') being arranged to be torsionally connected to a second shaft (18') so as to rotate about a second axis of rotation (x') substantially coinciding with the axis of said second shaft (18'), and the sleeves (16, 16'; 116, 116') of said first and second half-couplings (12, 12'; 112, 112') being rigidly connected (20; 120, 184, 184') to each other,
wherein each hub (14, 14 ; 114, 114') is provided with rounded outer teeth (36, 36'; 136, 136') having a symmetrical shape with respect to a plane of symmetry (s, s') perpendicular to the respective axis of rotation (x, x'),
wherein each sleeve (16, 16'; 116, 116') is provided with inner teeth (40, 40'; 140, 140') which mesh with the outer teeth (36, 36'; 136, 136') of the respective hub (14, 14'; 114, 114') and are axially slidable relative to these latter,
wherein the hub (14, 14'; 114, 114') of at least one of said first and second half-couplings (12, 12'; 112, 112') comprises a first radially inner tubular portion (26, 26'; 126, 126') and a second radially outer tubular portion (28, 28'; 128, 128') which is arranged coaxially to the first one (26, 26'; 126, 126') and on which the outer teeth (36, 36'; 136, 136') of the respective hub (14, 14'; 114, 114') are formed,
wherein said at least one half-coupling (12, 12'; 112, 112') further comprises a cap (44, 44'; 144, 144') which is fixed to the respective sleeve (16, 16'; 116, 116') and comprises a tubular portion (48, 48'; 148, 148') extending in an annular space (30, 30'; 130, 130') provided between said first and second tubular portions (26, 26', 28, 28'; 126, 126', 128, 128') of the respective hub (14, 14'; 114, 114'),
wherein said at least one half-coupling (12, 12 ; 112, 112') further comprises an axial travel limiting device (52, 52'; 152, 152') which is received in the annular space (30, 30'; 130, 130') of the respective hub (14,14'; 114, 114'), and
wherein the axial travel limiting device (52, 52'; 152, 152') comprises a stop annular element (54, 54'; 154, 154') and a pair of abutment elements (56, 58, 56', 58'; 156, 158, 156', 158') arranged on axially opposite sides of the stop annular element (54, 54'; 154, 154') so as to define respective axial abutment surfaces for this latter,
**characterized in that** the stop annular element (54, 54'; 154, 154') is integrally formed by the tubular portion (48, 48'; 148, 148') of the respective cap (44, 44'; 144, 144') and **in that** the abutment elements (56, 58, 56', 58'; 156, 158, 156', 158') are fixed to the respective hub (14, 14'; 114, 114').

2. Gear coupling according to claim 1, wherein the stop annular element (54, 54'; 154, 154') of the axial travel limiting device (52, 52'; 152, 152') of said at least one half-coupling (12, 12'; 112, 112') projects radially outwards from the tubular portion (48, 48'; 148, 148') of the respective cap (44, 44'; 144, 144'), and wherein the associated abutment elements (56, 58, 56', 58'; 156, 158, 156', 158') are fixed to said second tubular portion (28, 28'; 128, 128') of the respective hub (14, 14'; 114, 114').

3. Gear coupling according to claim 1, wherein the stop annular element (54, 54'; 154, 154') of the axial travel limiting device (52, 52'; 152, 152') of said at least one half-coupling (12, 12'; 112, 112') projects radially inwards from the tubular portion (48, 48'; 148, 148') of the respective cap (44, 44'; 144, 144'), and wherein the associated abutment elements (56, 58, 56', 58'; 156, 158, 156', 158') are fixed to said first tubular portion (26, 26'; 126, 126') of the respective hub (14, 14'; 114, 114').

4. Gear coupling according to any of the preceding claims, wherein the abutment elements (56, 58, 56', 58'; 156, 158, 156', 158') of the axial travel limiting device (52, 52'; 152, 152') of said at least one half-coupling (12, 12'; 112, 112') are arranged substantially equally spaced from the plane of symmetry (s, s') of the outer teeth (36, 36'; 136, 136') of the respective hub (14, 14'; 114, 114').

5. Gear coupling according to any of the preceding claims, wherein the abutment elements (56, 58, 56', 58'; 156, 158, 156', 158') of the axial travel limiting device (52, 52'; 152, 152') of said at least one half-coupling (12, 12'; 112, 112') are made of, or at least coated with, cushioning material.

6. Gear coupling according to any of the preceding claims, wherein said at least one half-coupling (12, 12'; 112, 112') comprises a seal member (62, 62'; 162, 162') mounted on the respective hub (14, 14'; 114, 114') and cooperating with a cylindrical surface of the tubular portion (48, 48'; 148, 148') of the respective cap (44,44'; 144, 144') arranged on the radially opposite side with respect to the stop annular element (54, 54'; 154, 154').

7. Gear coupling according to claim 6, wherein the seal member (62, 62'; 162, 162') of said at least one half-coupling (12, 12'; 112, 112') is arranged substantially aligned with the plane of symmetry (s, s') of the outer teeth (36, 36'; 136, 136') of the respective hub (14, 14'; 114, 114').

8. Gear coupling according to any of the preceding claims, wherein the sleeve (16, 16'; 116, 116') of one (12'; 112') of said first and second half-coupling (12, 12'; 112, 112') comprises a first radially inner sleeve part (38'; 138'), a second radially outer sleeve part (72'; 172') and a radially intermediate third sleeve part (74'; 174'), wherein said first, second and third sleeve parts (38', 72', 74'; 138', 172', 174') are arranged coaxially to each other, wherein the inner teeth (40'; 140') of the sleeve (16, 16'; 116, 116') are formed on said first sleeve part (38'; 138'), wherein said third sleeve part (74'; 174') is wedge-shaped and has a tapered outer surface (82'; 182') cooperating with a corresponding tapered inner surface (78'; 178') of said second sleeve part (72'; 172'), and wherein said third sleeve part (74'; 174') is force-fitted between said first and second sleeve parts (38', 72'; 138', 172') so as to allow torque transmission as a result of the friction between said sleeve parts (38', 72'; 138', 172') up to a predetermined maximum torque, whereby said first, second and third sleeve parts (38', 72', 74'; 138', 172', 174') operate as a torque overload safety device arranged to interrupt torque transmission above said predetermined maximum torque.

9. Gear coupling according to any of the preceding claims, wherein each of the sleeves (116, 116') of said first and second half-couplings (112, 112') forms respective connecting flanges (122, 122') having respective through holes (124, 124') for insertion of threaded connection means (120), as well as respective front teeth (184, 184') meshing with each other.

## Patentansprüche

1. Zahnkupplung (10; 110), umfassend erste und zweite Halbkupplungen (12, 12'; 112, 112'),
wobei jede der ersten und zweiten Halbkupplungen (12, 12'; 112, 112') eine Nabe (14, 14'; 114, 114') und eine Hülse bzw. Muffe (16, 16'; 116, 116') umfasst, wobei die Nabe (14; 114) der ersten Halbkupplung (12; 112) so angeordnet ist, dass sie torsionsmäßig mit einer ersten Welle (18) verbunden ist, um sich um eine erste Drehachse (x) zu drehen, die im Wesentlichen mit der Achse der ersten Welle (18) zusammenfällt, wobei die Nabe (14'; 114') der zweiten Halbkupplung (12'; 112') so angeordnet ist, dass sie torsionsmäßig mit einer zweiten Welle (18') verbunden ist, um sich um eine zweite Drehachse (x') zu drehen, die im Wesentlichen mit der Achse der zweiten Welle (18') zusammenfällt, und wobei die Hülsen (16, 16'; 116, 116') der ersten und zweiten Halbkupplungen (12, 12'; 112, 112') starr miteinander verbunden sind (20; 120, 184, 184'),
wobei jede Nabe (14, 14'; 114, 114') mit abgerundeten Außenzähnen (36, 36'; 136, 136') versehen ist, die eine symmetrische Form bezüglich einer Symmetrieebene (s, s') senkrecht zu der jeweiligen Drehachse (x, x') aufweisen,
wobei jede Hülse (16, 16'; 116, 116') mit Innenzähnen (40, 40'; 140, 140') versehen ist, die mit den Außenzähnen (36, 36'; 136, 136') der jeweiligen Nabe (14, 14'; 114, 114') in Eingriff sind und relativ zu diesen letzteren axial verschiebbar sind,
wobei die Nabe (14, 14'; 114, 114') von zumindest einer der ersten und zweiten Halbkupplungen (12, 12'; 112, 112') einen ersten radial inneren rohrförmigen Abschnitt (26, 26'; 126, 126') und einen zweiten radial äußeren rohrförmigen Abschnitt (28, 28'; 128, 128') umfasst, der koaxial zu dem ersten (26, 26'; 126, 126') angeordnet ist und an dem die Außenzähne (36, 36'; 136, 136') der jeweiligen Nabe (14, 14'; 114, 114') gebildet sind,
wobei die zumindest eine Halbkupplung (12, 12'; 112, 112') ferner eine Kappe (44, 44'; 144, 144') umfasst, die an der jeweiligen Hülse (16, 16'; 116, 116') fixiert bzw. befestigt ist und einen rohrförmigen Abschnitt (48, 48'; 148, 148') umfasst, der sich in einen bzw. einem ringförmigen Raum (30, 30'; 130, 130') erstreckt, der zwischen den ersten und zweiten rohrförmigen Abschnitten (26, 26', 28, 28'; 126, 126', 128, 128') der jeweiligen Nabe (14, 14'; 114, 114') bereitgestellt ist,
wobei die zumindest eine Halbkupplung (12, 12'; 112, 112') ferner eine Axialbewegungsbegrenzungsvorrichtung (52, 52'; 152, 152') umfasst, die in dem ringförmigen Raum (30, 30'; 130, 130') der jeweiligen Nabe (14, 14'; 114, 114') aufgenommen ist, und
wobei die Axialbewegungsbegrenzungsvorrichtung (52, 52'; 152, 152') ein ringförmiges Stoppelement (54, 54'; 154, 154') und ein Paar Anlageelemente (56, 58, 56', 58'; 156, 158, 156', 158') umfasst, die auf axial gegenüberliegenden bzw. entgegensetzten Seiten des ringförmigen Stoppelements (54, 54', 154, 154') angeordnet sind, um jeweilige axiale Anlageflächen bzw. -oberflächen für dieses letztere zu bilden,
**dadurch gekennzeichnet, dass** das ringförmige Stoppelement (54, 54'; 154, 154') integral bzw. einstückig durch den ringförmigen Abschnitt (48, 48'; 148, 148') der jeweiligen Kappe (44, 44'; 144, 144') gebildet ist und dass die Anlageelemente (56, 58, 56', 58'; 156, 158, 156', 158') an der jeweiligen Nabe (14, 14'; 114, 114') fixiert bzw. befestigt sind.

2. Zahnkupplung nach Anspruch 1, wobei das ringförmige Stoppelement (54, 54'; 154, 154') der Axialbewegungsbegrenzungsvorrichtung (52, 52'; 152, 152') der zumindest einen Halbkupplung (12, 12'; 112, 112') von dem ringförmigen Abschnitt (48, 48'; 148, 148') der jeweiligen Kappe (44, 44'; 144, 144') radial nach außen ragt, und wobei die assoziierten Anlageelemente (56, 58, 56', 58'; 156, 158, 156', 158') an dem zweiten ringförmigen Abschnitt (28, 28'; 128, 128') der jeweiligen Kappe (14, 14'; 114, 114') fixiert bzw. befestigt sind.

3. Zahnkupplung nach Anspruch 1, wobei das ringförmige Stoppelement (54, 54'; 154, 154') der Axialbewegungsbegrenzungsvorrichtung (52, 52'; 152, 152') der zumindest einen Halbkupplung (12, 12'; 112, 112') von dem ringförmigen Abschnitt (48, 48'; 148, 148') der jeweiligen Kappe (44, 44'; 144, 144') radial nach innen ragt, und wobei die assoziierten Anlageelemente (56, 58, 56', 58'; 156, 158, 156', 158') an dem ersten ringförmigen Abschnitt (26, 26'; 126, 126') der jeweiligen Kappe (14, 14'; 114, 114') fixiert bzw. befestigt sind.

4. Zahnkupplung nach einem der vorhergehenden Ansprüche, wobei die Anlageelemente (56, 58, 56', 58'; 156, 158, 156', 158') der Axialbewegungsbegrenzungsvorrichtung (52, 52'; 152, 152') der zumindest einen Halbkupplung (12, 12'; 112, 112') im Wesentlichen gleichmäßig beabstandet von der Symmetrieebene (s, s') der Außenzähne (36, 36'; 136, 136') der jeweiligen Nabe (14, 14'; 114, 114') angeordnet sind.

5. Zahnkupplung nach einem der vorhergehenden Ansprüche, wobei die Anlageelemente (56, 58, 56', 58'; 156, 158, 156', 158') der Axialbewegungsbegrenzungsvorrichtung (52, 52'; 152, 152') der zumindest einen Halbkupplung (12, 12'; 112, 112') aus einem Polstermaterial bestehen oder zumindest mit diesem beschichtet sind.

6. Zahnkupplung nach einem der vorhergehenden Ansprüche, wobei die zumindest eine Halbkupplung (12, 12'; 112, 112') ein Dichtungsglied (62, 62'; 162, 162') umfasst, das an der jeweiligen Nabe (14, 14'; 114, 114') montiert ist und mit einer zylindrischen Fläche bzw. Oberfläche des rohrförmigen Abschnitts (48, 48'; 148, 148') der jeweiligen Nabe (44, 44'; 144, 144') zusammenwirkt, die an der radial gegenüberliegenden bzw. entgegensetzten Seite bezüglich des ringförmigen Stoppelements (54, 54'; 154, 154') angeordnet ist.

7. Zahnkupplung nach Anspruch 6, wobei das Dichtungsglied (62, 62'; 162, 162') der zumindest einen Halbkupplung (12, 12'; 112, 112') im Wesentlichen ausgerichtet mit der Symmetrieebene (s, s') der Außenzähne (36, 36'; 136, 136') der jeweiligen Nabe (14, 14'; 114, 114') angeordnet ist.

8. Zahnkupplung nach einem der vorhergehenden Ansprüche, wobei die Hülse (16, 16'; 116, 116') von einer (12'; 112') der ersten und zweiten Halbkupplungen (12, 12'; 112, 112') einen ersten radial inneren Hülsenteil (38'; 138'), einen zweiten radial äußeren Hülsenteil (72'; 172') und einen radial mittleren dritten Hülsenteil (74'; 174') umfasst, wobei die ersten, zweiten und dritten Hülsenteile (38', 72', 74'; 138', 172', 174') koaxial zueinander angeordnet sind, wobei die Innenzähne (40'; 140') der Hülse (16, 16'; 116, 116') an dem ersten Hülsenteil (38'; 138') gebildet sind, wobei der dritte Hülsenteil (74'; 174') keilförmig ist und eine verjüngte äußere Fläche bzw. Oberfläche (82'; 182') aufweist, die mit einer entsprechenden verjüngten inneren Fläche bzw. Oberfläche (78'; 178') des zweiten Hülsenteils (72'; 172') zusammenwirkt, und wobei der dritte Hülsenteil (74'; 174') zwischen den ersten und zweiten Hülstenteilen (38', 72'; 138', 172') eingepresst bzw. kraftmäßig eingepasst ist, um eine Drehmomentübertragung als ein Ergebnis der Reibung zwischen den Hülsenteilen (38', 72'; 138', 172') bis zu einem vorbestimmten maximalen Drehmoment zu erlauben, wodurch die ersten, zweiten und dritten Hülsenteile (38', 72', 74'; 138', 172', 174') als eine Drehmomentüberlastungssicherheitsvorrichtung arbeiten, die angeordnet ist, eine Drehmomentübertragung über dem vorbestimmten maximalen Drehmoment zu unterbrechen.

9. Zahnkupplung nach einem der vorhergehenden Ansprüche, wobei jede der Hülsen (116, 116') der ersten und zweiten Halbkupplungen (112, 112') jeweilige Verbindungsflansche (122, 122') bildet, die jeweilige Durchgangslöcher (124, 124') zum Einsetzen von Gewindeverbindungsmitteln (120) sowie jeweilige Vorderzähne (184, 184') aufweisen, die miteinander in Eingriff sind.

## Revendications

1. Accouplement à denture (10 ; 110) comprenant des premier et deuxième demi-manchons d'accouplement (12, 12' ; 112, 112'),
dans lequel chacun desdits premier et deuxième demi-manchons d'accouplement (12, 12' ; 112, 112') comprend un moyeu (14, 14' ; 114, 114') et un manchon (16, 16' ; 116, 116'), le moyeu (14 ; 114) dudit premier demi-manchon d'accouplement (12 ; 112) étant agencé pour être connecté en torsion à un premier arbre (18) de manière à tourner autour d'un premier axe de rotation (x) qui coïncide substantiellement avec l'axe dudit premier arbre (18), le moyeu (14' ; 114') dudit deuxième demi-manchon d'accouplement (12' ; 112') étant agencé pour être connecté en torsion à un deuxième arbre (18') de manière à tourner autour d'un deuxième axe de rotation (x') qui coïncide substantiellement avec l'axe dudit deuxième arbre (18'), et les manchons (16, 16' ; 116, 116') desdits premier et deuxième demi-manchons d'accouplement (12, 12' ; 112, 112') étant connectés rigidement (20 ; 120, 184, 184') l'un à l'autre,
dans lequel chaque moyeu (14, 14' ; 114, 114') est muni de dents extérieures arrondies (36, 36' ; 136, 136') ayant une forme symétrique par rapport à un plan de symétrie (s, s') perpendiculaire à l'axe de rotation respectif (x, x'),
dans lequel chaque manchon (16, 16' ; 116, 116') est muni de dents intérieures (40, 40' ; 140, 140') qui engrènent avec les dents extérieures (36, 36' ; 136, 136') du moyeu respectif (14, 14' ; 114, 114') et qui peuvent glisser axialement par rapport à ces dernières,
dans lequel le moyeu (14, 14' ; 114, 114') d'au moins l'un desdits premier et deuxième demi-manchons d'accouplement (12, 12' ; 112, 112') comprend une première partie tubulaire radialement intérieure (26, 26'; 126, 126') et une deuxième partie tubulaire radialement extérieure (28, 28'; 128, 128') qui est placée de façon coaxiale avec la première partie (26, 26'; 126, 126') et sur laquelle sont formées les dents extérieures (36, 36' ; 136, 136') du moyeu respectif (14, 14' ; 114, 114'),
dans lequel ledit au moins un demi-manchon d'accouplement (12, 12' ; 112, 112') comprend en outre un chapeau (44, 44' ; 144, 144') qui est fixé au manchon respectif (16, 16' ; 116, 116') et comprend une partie tubulaire (48, 48' ; 148, 148') s'étendant dans un espace annulaire (30, 30' ; 130, 130') prévu entre lesdites première et deuxième parties tubulaires (26, 26', 28, 28' ; 126, 126', 128, 128') du moyeu respectif (14, 14' ; 114, 114'),
dans lequel ledit au moins un demi-manchon d'accouplement (12, 12' ; 112, 112') comprend en outre un dispositif de limitation de course axiale (52, 52' ; 152, 152') qui est reçu dans l'espace annulaire (30, 30' ; 130, 130') du moyeu respectif (14, 14' ; 114, 114'), et
dans lequel le dispositif de limitation de course axiale (52, 52' ; 152, 152') comprend un élément annulaire d'arrêt (54, 54'; 154, 154') et une paire d'éléments de butée (56, 58, 56', 58' ; 156, 158, 156', 158') placés sur des côtés axialement opposés de l'élément annulaire d'arrêt (54, 54'; 154, 154') afin de définir des surfaces de butée axiales respectives pour ce dernier,
**caractérisé en ce que** l'élément annulaire d'arrêt (54, 54'; 154, 154') est formé intégralement par la partie tubulaire (48, 48' ; 148, 148') du chapeau respectif (44, 44' ; 144, 144') et **en ce que** les éléments de butée (56, 58, 56', 58' ; 156, 158, 156', 158') sont fixés au moyeu respectif (14, 14' ; 114, 114').

2. Accouplement à denture selon la revendication 1, dans lequel l'élément annulaire d'arrêt (54, 54'; 154, 154') du dispositif de limitation de course axiale (52, 52' ; 152, 152') dudit au moins un demi-manchon d'accouplement (12, 12' ; 112, 112') fait saillie radialement vers l'extérieur depuis la partie tubulaire (48, 48' ; 148, 148') du chapeau respectif (44, 44' ; 144, 144'), et dans lequel les éléments de butée associés (56, 58, 56', 58' ; 156, 158, 156', 158') sont fixés à ladite deuxième partie tubulaire (28, 28' ; 128, 128') du moyeu respectif (14, 14' ; 114, 114').

3. Accouplement à denture selon la revendication 1, dans lequel l'élément annulaire d'arrêt (54, 54'; 154, 154') du dispositif de limitation de course axiale (52, 52' ; 152, 152') dudit au moins un demi-manchon d'accouplement (12, 12' ; 112, 112') fait saillie radialement vers l'intérieur depuis la partie tubulaire (48, 48' ; 148, 148') du chapeau respectif (44, 44' ; 144, 144'), et dans lequel les éléments de butée associés (56, 58, 56', 58' ; 156, 158, 156', 158') sont fixés à ladite première partie tubulaire (26, 26' ; 126, 126') du moyeu respectif (14, 14' ; 114 , 114').

4. Accouplement à denture selon l'une quelconque des revendications précédentes, dans lequel les éléments de butée (56, 58, 56', 58' ; 156, 158, 156', 158') du dispositif de limitation de course axiale (52, 52' ; 152, 152') dudit au moins un demi-manchon d'accouplement (12, 12' ; 112, 112') sont agencés à distance substantiellement égale du plan de symétrie (s, s') des dents extérieures (36, 36' ; 136, 136') du moyeu respectif (14, 14' ; 114, 114').

5. Accouplement à denture selon l'une quelconque des revendications précédentes, dans lequel les éléments de butée (56, 58, 56', 58' ; 156, 158, 156', 158') du dispositif de limitation de course axiale (52, 52' ; 152, 152') dudit au moins un demi-manchon d'accouplement (12, 12' ; 112, 112') sont faits de, ou au moins revêtus, d'un matériau d'amortissement.

6. Accouplement à denture selon l'une quelconque des revendications précédentes, dans lequel ledit au moins un demi-manchon d'accouplement (12, 12' ; 112, 112') comprend un élément d'étanchéité (62, 62' ; 162, 162') monté sur le moyeu respectif (14, 14' ; 114, 114') et coopérant avec une surface cylindrique de la partie tubulaire (48, 48' ; 148, 148') du chapeau respectif (44, 44' ; 144, 144') placé sur le côté radialement opposé par rapport à l'élément annulaire d'arrêt (54, 54'; 154, 154').

7. Accouplement à denture selon la revendication 6, dans lequel l'élément d'étanchéité (62, 62' ; 162, 162') dudit au moins un demi-manchon d'accouplement (12, 12' ; 112, 112') est substantiellement aligné avec le plan de symétrie (s, s') des dents extérieures (36, 36' ; 136, 136') du moyeu respectif (14, 14' ; 114, 114').

8. Accouplement à denture selon l'une quelconque des revendications précédentes, dans lequel le manchon (16, 16'; 116, 116') de l'un (12'; 112') desdits premier et deuxième demi-manchons d'accouplement (12, 12' ; 112, 112') comprend une première partie de manchon radialement intérieure (38' ; 138'), une deuxième partie de manchon radialement extérieure (72' ; 172') et une troisième partie de manchon radialement intermédiaire (74' ; 174'), dans lequel lesdites première, deuxième et troisième parties de manchon (38', 72', 74' ; 138', 172', 174') sont disposées coaxialement entre elles, dans lequel les dents intérieures (40'; 140') du manchon (16, 16' ; 116, 116') sont formées sur ladite première partie de manchon (38' ; 138'), dans lequel ladite troisième partie de manchon (74' ; 174') est en forme de coin et a une surface extérieure à rétrécissement (82' ; 182') qui coopère avec une surface intérieure à rétrécissement correspondante (78' ; 178') de ladite deuxième partie de manchon (72' ; 172'), et dans lequel ladite troisième partie de manchon (74' ; 174') est montée à force entre lesdites première et deuxième parties de manchon (38', 72' ; 138', 172') afin de permettre une transmission de couple en conséquence du frottement entre lesdites parties de manchon (38', 72' ; 138', 172') jusqu'à un couple maximal prédéterminé, moyennant quoi lesdites première, deuxième et troisième parties de manchon (38', 72', 74' ; 138', 172', 174') font office de dispositif de protection contre les surcouples adapté pour interrompre la transmission de couple au-dessus dudit couple maximal prédéterminé.

9. Accouplement à denture selon l'une quelconque des revendications précédentes, dans lequel chacun des manchons (116, 116') desdits premier et deuxième demi-manchons d'accouplement (112, 112') forme des brides de connexion respectives (122, 122') comportant des trous traversants respectifs (124, 124') pour l'insertion d'un moyen de connexion fileté (120), ainsi que des dents avant respectives (184, 184') qui engrènent entre elles.
